(19) Europäisches Patentamt
European Patent Office
Office européen des brevets

(11) **EP 3 085 571 A1**

(12) **EUROPEAN PATENT APPLICATION**

(43) Date of publication:
**26.10.2016 Bulletin 2016/43**

(21) Application number: **16164141.0**

(22) Date of filing: **07.04.2016**

(51) Int Cl.:
**B60N 2/00** (2006.01)  **B60N 2/70** (2006.01)
**G01G 19/414** (2006.01)  **G01L 1/12** (2006.01)
**B29C 44/12** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.04.2015 JP 2015085824**

(71) Applicant: **Toyo Tire & Rubber Co. Ltd.
Osaka-shi,
Osaka 550-8661 (JP)**

(72) Inventors:
• FUKUDA, Takeshi
 Osaka, 550-8661 (JP)
• OHTA, Takahiro
 Osaka, 550-8661 (JP)

(74) Representative: **Eisenführ Speiser
Patentanwälte Rechtsanwälte PartGmbB
Postfach 10 60 78
28060 Bremen (DE)**

(54) **DEFORMATION DETECTION SENSOR AND PRODUCTION OF THE SAME**

(57)  The present invention provides a deformation detection sensor which combines a magnetic resin dispersing a magnetic filler in a resin with a magnetic sensor, of which durability of long period of use is highly enhanced.

The present invention thus provides a deformation detection sensor which comprises:

a magnetic resin-containing polymer foam (6) which comprises a magnetic resin (4), in which a magnetic filler is contained, and a polymer foam (5) in which the magnetic resin is included, and

a magnetic sensor (3) that detects a magnetic change caused by a deformation of the magnetic resin-containing polymer foam,

wherein an average cell diameter of cells of the polymer foam in the vicinity of an interface between the magnetic resin and the polymer foam is smaller than that of cells of a center portion of the polymer foam, and a production thereof.

[Fig. 1]

EP 3 085 571 A1

**Description**

FIELD OF THE INVENTION

The present invention is related to a deformation detection sensor, in particular a deformation detection sensor used for a car seat, and a production method thereof.

BACKGROUND OF THE INVENTION

There has been practically used a warning system which detects whether a person is sit on a seat in a vehicle, such as an automobile and then alerts if the person does not couple a seat belt. The warning system generally gives off an alert when it detects the sitting of the person and simultaneously detects not coupling the seat belt. The apparatus generally comprises a sitting sensor which detects whether a person is sitting on a seat and a sensor which detects not coupling of the seat belt with a buckle although the person is seated, which gives off an alert when the uncoupling of the seat belt is detected. The sitting sensor necessitates high durability because it must detect a person sitting down many times. It is also necessary that, when a person is seated, the person does not feel the sensation of any foreign object in the seat.

JP 2012-108113 A (Patent Document 1) discloses a sitting sensor equipped in a seat, detecting the sitting of a person, which comprises electrodes facing with each other in a cushion material and detects an electric contact of the electrodes. This sensor employs an electrode and should equip wiring. The wiring can be disconnected by receiving a large displacement and gives some problems in durability. In addition, the electrode is generally made of metallic substance which may create a sensation of a foreign object. Even if the electrode is not metallic, the feeling of a foreign object would easily generate based on the other substances.

JP 2011-255743 A (Patent Document 2) discloses an electrostatic capacitance-type sitting sensor which comprises sensor electrodes facing with each other, between which dielectric substance is inserted, and an electrostatic capacitance-type sensor that measures an electrostatic capacity between the electrodes. This sensor also employs electrodes and should equip wiring, which gives rise to durability problems as same with Patent Document 1. It is also difficult to prevent a sensation of a foreign object.

JP 2007-212196 A (Patent Document 3) discloses a load detection device for a vehicle seat, which comprises a magnetism generator equipped with a displaceable flexible element and a magnetic sensor, equipped with a fixing element of a flame, having a magnetic impedance element that detects a magnetic field generated by the magnetism generator. Since the magnetism generator includes a magnet having a specified size in this device, it is quite difficult to dispose the magnetism generator near a surface of a cushion material without any foreign object sensation. In order to avoid the foreign object sensation, it is considered that the magnetism generator is disposed inside the cushion material, but this leads to the deterioration of detection accuracy.

JP 2006-014756 A (Patent Document 4) discloses a biosignal detection device which comprises a permanent magnet and a magnetic sensor. Since the device also employs the permanent magnet which would give a foreign object sensation, it is difficult to place the device near a surface of the cushion material. The displacement of the device inside the cushion material leads to the deterioration of detection accuracy.

SUMMARY OF THE INVENTION

The present inventors have already proposed a deformation detection sensor wherein a magnetic resin, in which magnetic filler is dispersed in a resin, is employed and is combined with a magnetic sensor, in order to enhance the durability of the deformation detection sensor and to obtain a seat which does not provide any foreign object sensation, but it is further desired to enhance durability for a long period of time. As the results of the intense study, the present inventors have found that, by controlling an average cell diameter in an interface between the magnetic resin and the polymer foam in the magnetic resin-containing polymer foam, the durability of the sensor is enhanced for a long period of time, thus the present invention having been accomplished.

Accordingly, the present invention provides a deformation detection sensor which comprises:

a magnetic resin-containing polymer foam which comprises a magnetic resin, in which a magnetic filler is contained, and a polymer foam in which the magnetic resin is included, and
a magnetic sensor that detects a magnetic change caused by a deformation of the magnetic resin-containing polymer foam,
wherein an average cell diameter of cells of the polymer foam in the vicinity of an interface between the magnetic resin and the polymer foam is smaller than that of cells of a center portion of the polymer foam.

The present invention also provides a method for producing a deformation detection sensor, comprising the steps of:

a step of dispersing a magnetic filler in a polyurethane resin precursor,
a step of curing the resin precursor to form a magnetic resin,
a step of preliminary heating (pre-heating) the magnetic resin,
a step of placing the magnetic resin in a mold for a polymer foam,
a step of pouring a polyurethane raw material of the polymer foam into the mold to foam, whereby the magnetic resin is integrated with the polymer foam, and
a step of combining the magnetic resin-containing polymer foam with a magnetic sensor that detects a magnetic change caused by a deformation of the magnetic resin-containing polymer foam.

It is preferred that a difference between the average cell diameter of cells of the polymer foam in the vicinity of an interface of the magnetic resin of the polymer foam and that of cells of the center portion of the polymer foam is not less than 30 $\mu$m.

It is also preferred that the magnetic resin and the polymer foam are made of polyurethane.

It is further preferred that the polyurethane which forms the magnetic resin comprises a mono-ol component.

It is more preferred that the mono-ol component is a mono-ol having an end alkyl group.

It is further more preferred that the mono-ol component is contained in an amount of 0.1 to 1.0 meq/ g in the total of the polyurethane raw material.

It is preferred that the magnetic resin and the polymer foam are adhered by self-adhesion.

It is also preferred that wherein the pre-heating is conducted at a temperature of 70 to 130 °C for 0.25 to 4 hours.

It is further preferred that the magnetic resin-containing polymer foam is a cushion pad for a vehicle and the deformation to be detected occurs by a sitting of a person.

According to the present invention, it is hard to peel the magnetic resin off when durability test is conducted, by that an average cell diameter of cells of the polymer foam in the vicinity of an interface between the magnetic resin and the polymer foam is smaller than that of cells of a center portion of the polymer foam, thus enhancing stability.

It is not limited to a particular theory, but it is understood that the smaller average cell diameters in the vicinity of an interface between the magnetic resin and the polymer resin can exhibit high adhesion, as the polymer foam is closely and finely contacted with the magnetic resin.

BRIEF DESCRIPTION OF THE DRAWINGS

Fig. 1 is a schematic sectional view which shows an embodiment that the deformation detection sensor of the present invention is applied to a seat for a vehicle.
Fig. 2 shows a schematic perspective view of the magnetic resin-containing polymer foam of the present invention.

DETAILED DESCRIPTION OF THE PREFERRED EMBODIMENTS

The present invention will be explained in detail by referring the drawings.

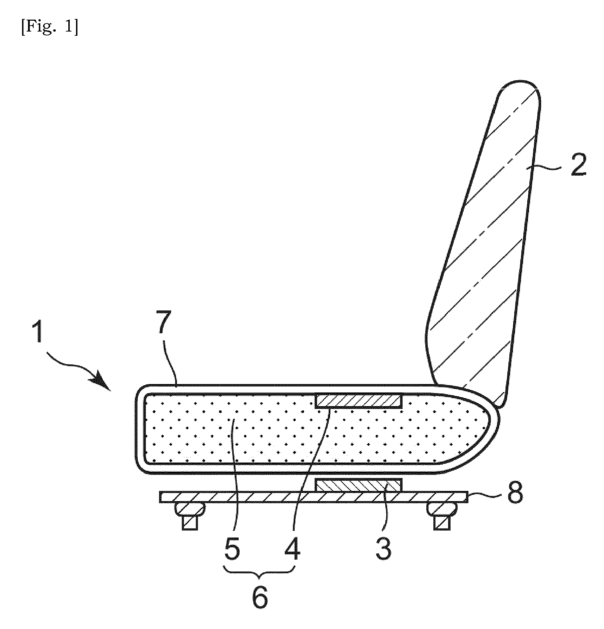

Fig. 1 is a schematic sectional view which shows an embodiment that the deformation detection sensor of the present invention is applied to a seat for a vehicle.

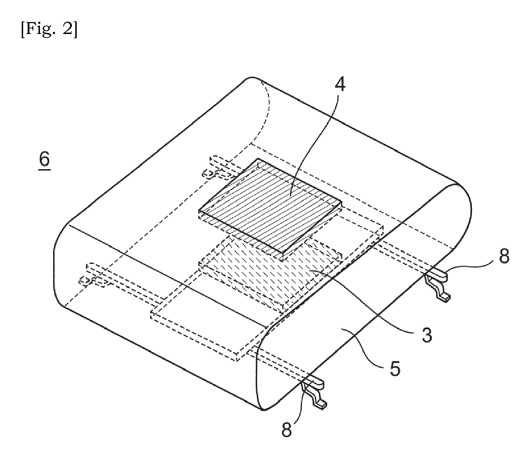

Fig. 2 shows a schematic perspective view of the magnetic resin-containing polymer foam of the present invention.

As shown in Fig. 1, the deformation detection sensor of the present invention is basically composed of a sitting portion 1 and a magnetic sensor 3. When the deformation detection sensor is used for a seat for a vehicle, a backrest portion 2 is present in contact with an end portion of the sitting portion 1. The sitting portion 1 is composed of a magnetic resin-containing polymer foam 6 which comprises a magnetic resin 4 and a polymer foam 5; and an outer skin 7 covering the magnetic resin-containing polymer foam 6. The magnetic resin 4 is disposed in layer in a portion of the sitting surface in the polymer foam 5. It is preferred that the magnetic sensor 3 is fixed to a pedestal 8 supporting the seat for a vehicle. The pedestal 8 is fixed to a car body in the case of a car, which is not shown in the figures.

Fig. 2 shows a perspective view of the magnetic resin-containing polymer foam 6 of the present invention, which is composed of the magnetic resin 4 and the polymer foam 5, and it further shows the pedestal 8 and the magnetic sensor 3 mounting on the pedestal 8. The magnetic resin 4 is disposed on an uppermost portion of the polymer foam, which can highly receive the deformation when a person is sitting on the seat. Fig. 3 does not show the outer skin 7 which is present on the magnetic resin-containing polymer foam 6. The outer skin 7 is generally made of leather, fabric, synthetic resin or the like, which is not limited thereto.

The magnetic resin 4 contains a magnetic filler dispersed therein, which has magnetism by way of a magnetization method or another method. When a person sits on the sitting portion 1, the magnetic resin-containing polymer foam 6 is deformed and the magnetic field is changed thereby. The change of the magnetic field is detected by the magnetic sensor 3 to inspect the person sitting on the seat. In Figs. 1 and 2, the polymer foam 6 which contains the magnetic resin 4 is present near the buttock of the person and, when the person is sitting, the sensor inspects it and, for example, when the person does not wear a seat belt, it alerts to the person. In addition, the magnetic resin-containing polymer foam 6 may be used as a backrest which contacts a backside of a person. When the polymer foam 6 is used as a backrest, the magnetic sensor can detect a posture of the sitting person.

According to the present invention, an average cell diameter of the polymer foam 5 is controlled. Concretely, it is necessary that an average cell diameter of cells of the polymer foam in the vicinity of an interface between the magnetic resin and the polymer foam is smaller than that of cells of a center portion of the polymer foam. The difference of the average cell diameter and the smaller average cell diameter than a center portion of the polymer foam make the polymer foam closely and finely contacted with the magnetic resin and enhance adhesion therebetween, thus being hard to peel the magnetic resin off and enhancing stability. The average cell diameter where they are present in the vicinity of the magnetic resin can be determined by cutting the polymer foam along with the interface at the position of about 1 mm apart from an interface between the magnetic resin and the polymer foam, observing a cut surface with a scanning electron microscope (SEM; available from Hitachi Science Systems Co., Ltd. as S-3500N) with a magnification of 50 times to obtain an image, of which cell diameters in a desired area are then determined by an image analysis software (WinROOF available from Mitani Shouji Co., Ltd.) to obtain an average cell diameter of the polymer foam. An average cell diameter around a center portion of the polymer foam is determined by cutting the polymer foam along with the magnetic resin at the position of about 5 cm apart from an interface between the magnetic resin and the polymer foam and treating it same as mentioned in the determination of the average cell diameter in the vicinity of the magnetic resin.

The preparation of the polymer foam having different average cell diameter as mentioned above can be done by many methods. For example, when preparing the magnetic resin, a mono-ol, particularly a mono-ol having an end alkyl group, is formulated into a raw material of the magnetic resin to enhance hydrophobic properties in the vicinity of the magnetic resin, thus reducing water content in the magnet resin to make the size of the cells smaller and finer after foaming. In addition, it can also be done by pre-heating the magnetic resin and is put in a mold for the polymer foam, when forming the polymer foam, to make the cells smaller and finer.

The average cell diameter can suitably be within the range of 100 to 400 $\mu$m, preferably 150 to 350 $\mu$m in the vicinity of the magnetic resin of the polymer foam and within the range of 300 to 450 $\mu$m, preferably 330 to 400 $\mu$m in a center portion of the polymer foam. A difference of the average cell diameter between the vicinity and the center portion is not less than 20 $\mu$m, preferably within the range of 30 to 250 $\mu$m.

It is preferred that the magnetic resin 4 has a thickness of 0.5 to 20 mm, preferably 1.0 to 5.0 mm. Thicknesses of less than 0.5 mm lower an amount of the magnetic filler and deteriorate the detection accuracy of the sensor and those of more than 20 mm have a tendency to provide a foreign object sensation given by the magnetic resin to the person sitting.

Magnetic resin

The term "magnetic resin" employed in the present specification means a resin in which a magnetic filler (an inorganic filler having magnetism) is dispersed.

The magnetic filler generally includes rare earth-based, iron-based, cobalt based, nickel-based or oxide-based filler, which can be used in the present invention. The rare earth-based magnetic filler is preferred because it shows high magnetism, but is not limited thereto. Neodymium-based magnetic filler is more preferred. A shape of the magnetic filler is not limited, but includes spherical, flake, needle, columnar or indefinite shape. The magnetic filler may preferably have an average particle size of 0.02 to 500 $\mu$m, preferably 0.1 to 400$\mu$m, more preferably 0.5 to 300 $\mu$m. If it has an average particle size of less than 0.02 $\mu$m, the magnetic properties of the magnetic filler become poor and if it has an average particle size of more than 500 $\mu$m, the mechanical properties (e.g. brittleness) of the magnetic resin become poor.

The magnetic filler may be introduced into the resin after it is magnetized, but it is preferred that the magnetic filler is magnetized after it is introduced into the resin, because the polarity of the magnetic filler can be easily controlled and the detection of magnetism can be easily carried out.

The resin for the magnetic resin can be general resin, but preferably includes thermoplastic elastomer, thermosetting elastomer or a mixture thereof. Examples of the thermoplastic elastomers are styrene based thermoplastic elastomer, polyolefin based thermoplastic elastomer, polyurethane based thermoplastic elastomer, polyester based thermoplastic elastomer, polyamide based thermoplastic elastomer, polybutadiene based thermoplastic elastomer, polyisoprene based thermoplastic elastomer, fluororubber based thermoplastic elastomer and the like. Examples of the thermosetting elastomer are diene based synthetic rubber, such as polyisoprene rubber, polybutadiene rubber, styrene-butadiene rubber, polychloroprene rubber, nitrile rubber, and ethylene-propylene rubber; non-diene based synthetic rubber, such as ethylene-propylene rubber, butyl rubber, acryl rubber, polyurethane rubber, fluororubber, silicone rubber, and epichlorohydrin rubber; natural rubber; and the like. Among them, thermosetting elastomer is preferred, because it can be used in a long period of time during which damage or fatigue of the magnetic resin can be inhibited. More preferred is polyurethane elastomer (also mentioned herein as polyurethane rubber) or silicone elastomer (also mentioned herein as silicone rubber).

The resin can preferably be polyurethane elastomer or silicone elastomer. In the case of polyurethane elastomer, an active hydrogen-containing compound is mixed with a magnetic filler, into which an isocyanate component is added and mixed to form a mixture solution. In addition, polyurethane elastomer can also be prepared by mixing an isocyanate component with a magnetic filler, into which an active hydrogen-containing compound is added and mixed to form a mixture solution. The resulting mixture solution is poured in a mold which has been treated with a releasing agent, and then heated to a curing temperature to cure, thus obtaining a polyurethane elastomer. In the case of silicone elastomer, a precursor of silicone elastomer is combined with a magnetic filler and mixed, followed by heating it to cure, thus obtaining a silicone elastomer. When forming the mixture solution, a solvent may be added thereto, if necessary.

The isocyanate component and the active hydrogen-containing component to be employed for the polyurethane elastomer are listed hereinafter. According to the present invention, as mentioned above, since an average cell diameter in the vicinity of an interface between the magnetic resin and the polymer foam is made smaller, a mono-ol may be formulated as a portion of the active hydrogen-containing component.

The isocyanate component is not limited and can be anyone that has been employed in the field of polyurethane. Examples of the isocyanate components are an aromatic diisocyanate, such as 2,4-toluene diisocyanate, 2,6-toluene diisocyanate, 2,2'-diphenylmethane diisocyanate, 2,4'-diphenylmethane diisocyanate, 4,4'-diphenylmethane diisocyanate, 1,5-naphthalene diisocyanate, p-phenylene diisocyanate, m-phenylene diisocyanate, p-xylylene diisocyanate, and m-xylylene diisocyanate; an aliphatic diisocyanate, such as ethylene diisocyanate, 2,2,4-trimethylhexamethylene diisocyanate, and 1,6-hexamethylene diisocyanate; an alicyclic diisocyanate, such as 1,4-cyclohexane diisocyanate, 4,4'-dicyclohexylmethane diisocyanate, isophorone diisocyanate, and norbornane diisocyanate. The compounds can be used alone or in combination of two or more compounds thereof. In addition, the isocyanate can be modified by urethane modification, allophanate modification, biuret modification, isocyanulate modification or the like.

The active hydrogen-containing compound can be anyone that has been employed in the field of polyurethane. Examples of the active hydrogen-containing compounds are a polyether polyol, such as polytetramethylene glycol, polypropylene glycol, polyethylene glycol and a copolymer of polypropylene oxide and polyethylene oxide; a polyester polyol, such as polybutylene adipate, polyethylene adipate, and 3-methyl-1,5-pentane adipate; a polyester polycarbonate polyol, such as a reaction product of a polyester glycol (e.g. polycaprolactone polyol and polycaprolactone) and an alkylene carbonate; a polyester polycarbonate polyol obtained by reacting ethylene carbonate with a polyhydric alcohol to form a reaction mixture, followed by reacting the reaction mixture with an organic dicarboxylic acid; a polycarbonate polyol obtained by ester-exchange reacting a polyhydroxyl compound with an aryl carbonate; and the like. The active hydrogen-containing compounds can be used alone or a combination of two or more compounds thereof.

In addition to the above-mentioned high molecular weight polyol component, the active hydrogen-containing component can also include a low molecular weight polyol, such as ethylene glycol, 1,2-propylene glycol, 1,3-propylene glycol, 1,4-butanediol, 1,6-hexanediol, neopentyl glycol, 1,4-cyclohexane dimethanol, 3-methyl-1, 5-pentanediol, diethylene glycol, triethylene glycol, 1,4-bis(2-hydroxyethoxy)benzene, trimethylolpropane, glycerin, 1,2,6-hexane triol, pentaerythritol, tetramethylol cyclohexane, methyl glucoside, sorbitol, mannitol, dulcitol, sucrose, 2,2,6,6-tetrakis(hydroxymethyl)cyclohexanol, and triethanolamine; and a low molecular weight polyamine, such as ethylenediamine, tolylenediamine, diphenylmethanediamine, diethylenetriamine and the like. These compounds can be used alone or a combination of two or more compounds thereof. A polyamine, including 4,4'-methylenebis(o-chloroaniline)(MOCA), 2,6-dichloro-p-phenylenediamine, 4,4'-methylenebis(2,3-dichloroaniline), 3,5-bis(methylthio)-2,4-toluenediamine, 3,5-bis(methylthio)-2,6-toluenediamine, 3,5-diethyltoluene-2,4-diamine, 3,5-diethyltoluene-2,6-diamine, trimethyleneglycol-di-p-aminobenzoate, polytetramethyleneoxide-di-p-aminobenzoate, 1,2-bis(2-aminophenylthio)ethane, 4,4'-diamino-3,3'-diethyl-5,5'-dimethyldiphenylmethane, N,N'-di-sec-butyl-4,4'-diaminodiphenylmethane, 4,4'-diamino-3,3'-diethyldiphenylmethane, 4,4'-diamino-3,3'-diethyl-5,5'-dimethyldiphenylmethane, 4,4'-diamino-3,3'-diisopropyl-5,5'-dimethyldiphenylmethane, 4,4'-diamino-3,3', 5,5'-tetraethyldiphenylmethane, m-xylylenediamine, N,N'-di-sec-butyl-p-phenylenediamine, m-phenylenediamine, p-xylylenediamine; and the like, may also be added thereto.

The mono-ol component to be formulated into the magnetic resin can be anyone that has been known to the art in the field of polyurethane, but a mono-ol having an end alkyl group can be preferably employed in the present invention. If the mono-ol having an end alkyl group is employed, the magnetic resin has high hydrophobicity and water foaming becomes difficult when producing the polymer foam, thus an average cell diameter near the magnetic resin in the polymer foam being smaller than that of a center portion of the polymer foam. The term "end alkyl group" means that an alkyl group is present on an end not having a hydroxyl group of a mono-ol and that many types of groups which does not inhibit a reaction can be present between the alkyl group and the hydroxyl group.

The mono-ol component, particularly the mono-ol having an end alkyl group can include, for example, simple alcohol, such as methanol, ethanol, n-propyl alcohol and isopropyl alcohol; or a (poly)alkyleneglycol monoalkyl ether having the following general formula (1):

$$R_1\text{-}(OCH_2CHR_2)_n\text{-}OH \qquad (1)$$

(wherein $R_1$ shows a methyl group, an ethyl group, a propyl group, a butyl group, an aryl group and a substituted aryl group, and $R_2$ shows a hydrogen atom or a methyl group, n is an integer of 1 to 5.) for example diethyleneglycol monoethyl ether, diethyleneglycol monomethyl ether, dipropyleneglycol monoethyl ether, dipropyleneglycol monomethyl ether, 2-methoxyethanol, ethyleneglycol monoethyl ether, ethyleneglycol monobutyl ether, ethyleneglycol mono-t-butyl ether, ethyleneglycol monophenyl ether, diethyleneglycol monobutyl ether, triethyleneglycol monobutyl ether and polyethyleneglycol mono-p-isooctylphenyl ether. The mono-ol component can also be a carboxylic acid to which alkyleneoxide is added, for example an adduct of an alkylene oxide to a carboxylic acid (such as, acrylic acid, methacrylic acid or the like). In addition, a one-end reactive silicone having an end hydroxyl group of polydimethylsiloxane structure can also be employed.

The mono-ol can be formulated in the polyurethane raw material in an amount of 0.1 to 1.0 meq/g, preferably 0.2 to 0.8 meq/g, based on a total amount of the polyurethane raw material. If an amount of the mono-ol component is less than 0.1 meq/g, the control of the average cell diameter near the magnetic resin in the polymer foam becomes difficult. If it is more than 1.0 meq/g, it is difficult to obtain a cured polymer foam.

An amount of the magnetic filler in the magnetic resin can preferably be 1 to 450 parts by weight, more preferably 2 to 400 parts by weight, based on 100 parts by weigh of the resin. Amounts of less than 1 part by weight make it difficult to detect magnetic changes and those of more than 450 parts by weight make the resin brittle and do not obtain the desired properties.

In the present invention, the magnetic resin can also be adhered to the polymer foam using a double-side adhesive tape or an adhesive agent, but it is preferably integrated with the polymer foam by self-adhesion. If it is self-adhered, the magnetic resin does not peel off from the polymer foam easily and shows excellent durability. Since the magnetic resin is flexible, the magnetic resin-containing polymer foam is soft and shows good sitting comfort.

The magnetic resin may be non-foamed and does not have any foamed cell, but the magnetic resin may be foamed and has foamed cells, in view of stability, enhanced detection accuracy of the magnetic sensor and weight reduction. A foamed body can be a foamed resin, but a thermosetting resin foam is preferred because of physical properties, such as compression set and the like. The thermosetting resin foam can be polyurethane resin foam, silicone resin foam and the like, but polyurethane resin foam is more preferred. The polyurethane resin foam can be obtained from the isocyanate component and active hydrogen-containing compound as mentioned above.

In the present invention, a peripheral portion of the magnetic resin may be sealed by a sealing material as far as it does not deteriorate the flexibility of the magnetic resin. When the magnetic resin is sealed by the sealing material, it is not possible to control an average cell diameter of the magnetic resin by the use of the mono-ol in the magnetic resin or the like, but it can be possible to control an average cell diameter by the other method (for example, pre-heating of the sealing material or the like). The sealing material can be thermoplastic resin, thermosetting resin or a mixture thereof. The thermoplastic resin includes styrene based thermoplastic elastomer, polyolefin based thermoplastic elastomer, polyurethane based thermoplastic elastomer, polyester based thermoplastic elastomer, polyamide based thermoplastic elastomer, polybutadiene based thermoplastic elastomer, polyisoprene based thermoplastic elastomer, fluoride based thermoplastic elastomer, ethylene ethylacrylate copolymer, ethylene vinylacetate copolymer, polyvinylchloride, polyvinylidene chloride, chlorinated polyethylene, fluoride resin, polyamide, polyethylene, polypropylene, polyethylene terephthalate, polybutylene terephthalate, polystyrene, polybutadiene or the like. The thermosetting resin includes, for example, diene based synthetic rubber, such as polyisoprene rubber, polybutadine rubber, styrene-butadiene rubber, polychloroprene rubber and acrylonitrile butadiene rubber; non-diene based rubber, such as ethylene-propylene rubber, ethylene-propylene-diene rubber, butyl rubber, acryl rubber, polyurethane rubber, fluororubber, silicone rubber and epichlorohydrin rubber; natural rubber; polyurethane resin; silicone resin; epoxy resin; or the like. When the sealing material is thermoplastic resin, thermosetting resin or a mixture thereof, it can be used in the form of film. The film can be a laminated film, a metal foil (e.g. aluminum foil) or a film having vapor deposited film composed of a film on which a metal is vapor deposited. The sealing material has technical effects that inhibit the formation of rust of the magnetic filler in the magnetic resin.

Process for producing the deformation detection sensor

The present invention also provides a method for producing a deformation detection sensor, comprising the steps of:

a step of dispersing a magnetic filler in a polyurethane resin precursor,

a step of curing the resin precursor to form a magnetic resin,

a step of preliminary heating (pre-heating) the magnetic resin,

a step of placing the magnetic resin in a mold for a polymer foam,

a step of pouring a polyurethane raw material of the polymer foam into the mold to foam, whereby the magnetic resin is integrated with the polymer foam, and

a step of combining the magnetic resin-containing polymer foam with a magnetic sensor that detects a magnetic change caused by a deformation of the magnetic resin-containing polymer foam.

The magnetic resin can be produced by mixing the magnetic filler in a resin precursor containing a mono-ol component to react in a container, when the resin is formed. When the magnetic resin is made of polyurethane, it is possible to control an average cell diameter by formulating the mono-ol component into the resin precursor.

Next, the obtained magnetic resin is preliminary heated (preheated and then placed in a mold for the polymer foam into which a raw material for the polyurethane polymer foam is poured, to integrate the magnetic resin with the polymer foam. When the magnetic resin is placed in the mold for the polymer foam, the placement of the magnetic resin is easily conducted by using magnetism attracting a magnetized material, for example a magnet is preliminary put in the mold and attracts the magnetic resin. The magnet may be preliminary placed in a place where the magnetic resin is disposed, or the placement may be carried out by operating the strong magnetic outside the mold to a place where the magnetic resin is disposed. The placement of the magnetic resin may also be conducted by using a double side adhesive tape or an adhesive agent to adhere the magnetic resin therewith, in addition to the use of the magnet.

Polymer foam

The polymer foam can be obtained by foaming a raw solution of the polymer foam. The polymer foam can be a general resin foam and among them thermosetting resin foam, such as polyurethane resin foam or silicone resin foam, is preferred. In the case of polyurethane resin foam, the raw solution generally comprises a polyisocyanate component, a polyol and an active hydrogen-containing compound such as water. The polyisocyanate component and active hydrogen-containing compound are listed hereinafter.

The polyisocyanate component can be anyone that has been used in the field of polyurethane. Examples of the polyisocyanate components are an aromatic diisocyanate, such as 2,4-toluene diisocyanate, 2,6-toluene diisocyanate, 2,2'-diphenylmethane diisocyanate, 2,4'-diphenylmethane diisocyanate, 4,4'-diphenylmethane diisocyanate, 1,5-naphthalene diisocyanate, p-phenylene diisocyanate, m-phenylene diisocyanate, p-xylylene diisocyanate, m-xylylene diisocyanate and the like. It can also be polynuclear compounds of diphenylmethane diisocyanate (crude MDI). The polyisocyanate compound can further be an aliphatic diisocyanate, such as ethylene diisocyanate, 2,2,4-trimethylhexamethylene diisocyanate and 1,6-hexamethylene diisocyanate; an alicyclic diisocyanate, such as 1,4-cyclohexane diisocyanate, 4,4'-dicyclohexylmethane diisocyanate, isophorone diisocyanate, norbornane diisocyanate; and the like. These can be used alone or in combination with two or more isocyanates thereof. In addition, the isocyanate can be modified by urethane modification, allophanate modification, biuret modification, isocyanulate modification or the like.

The active hydrogen-containing compound can be anyone that has generally been used in the field of polyurethane. Examples of the active hydrogen-containing compounds are a polyether polyol, such as polytetramethylene ether glycol, polypropylene glycol, polyethylene glycol and a copolymer of propylene oxide and ethylene oxide; a polyester polyol, such as polybutylene adipate, polyethylene adipate, and 3-methyl-1,5-pentane adipate; a polyester polycarbonate polyol, such as a reaction product of polyester glycol (e.g. polycaprolactone polyol or polycaprolactone) and alkylene carbonate; a polyester polycarbonate polyol obtained by reacting polyethylene carbonate with a polyhydric alcohol to form a reaction mixture, followed by reacting the reaction mixture with an organic dicarboxylic acid; a polycarbonate polyol obtained by ester-exchange reacting a polyhydroxyl compound with an aryl carbonate; and the like. The active hydrogen-containing compounds can be used alone or a combination of two or more compounds thereof. The concrete examples of the active hydrogen-containing compounds include, for example EP 3028, EP 3033, EP 828, POP 3128, POP 3428 and POP 3628, commercially available from Mitsui Chemical Inc.; and the like.

When producing the polymer foam, other components, such as crosslinking agent, foam stabilizer, catalyst and the like can be employed and they are not limited thereto.

The crosslinking agent may include triethanolamine, diethanolamine or the like. The foam stabilizer may include SF-2962, SRX-274C, 2969T and the like, available from Dow Corning Toray Co., Ltd. Examples of the catalysts are Dabco 33LV available from Air Products Japan Co., Ltd., Toyocat ET, SPF2, MR available from Tosoh Corporation, and like.

In addition, an additive, such as water, toner, flame retardant or the like can be suitably employed if necessary.

Examples of the flame retardants are CR 530 or CR 505 available from Daihachi Chemical Industry Co., Ltd.

Deformation detection sensor

The magnetic resin-containing polymer foam as obtained above can be combined with the magnetic sensor to obtain the deformation detection sensor. In the deformation detection sensor, the magnetic resin-containing polymer foam is deformed by a person sitting on the seat to change magnetism. The magnetic change is detected by the magnetic sensor to find the person sitting on the seat. In the present invention, since an adhesion strength between the magnetic resin and polymer foam is strong, the magnetic resin can be easily followed with the deformation of the polymer foam and deformed largely, so that detection sensitivity is enhanced.

In the producing method of the deformation detection sensor of the present invention, the magnetic resin can be present either an upper surface of the polymer foam or a lower surface of the polymer foam. The magnetic resin may also be present in or inside the polymer foam.

The magnetic sensor can be anyone that has generally been used for detecting magnetism. It may include a magnetoresistive element (e.g. a semiconductor magnetoresistive element, an anisotropic magnetoresistive element (AMR), a gigantic magnetoresistive element (GMR) or a tunnel magnetoresistive element (RMR)), a hall element, an inductor, an MI element, a flux gate sensor and the like. The hall element is preferred because it has excellent sensitivity widely or extensively.

In addition, the deformation detection sensor of the present invention can be used for different applications other than cushion pads for vehicles, such as a hand or a skin of a robot, a surface pressure distribution of a bed or the like, a road surface condition or an air pressure of a tire, an exercise condition of a living body (such as motion captures, respiratory conditions, relaxed states of muscle, and the like), an invasion into a keep-out area, a foreign object of a slide door.

EXAMPLES

The present invention is further explained based on the following examples which, however, are not construed as limiting the present invention to their details.

Example 1

Preparation of magnetic resin

A reaction vessel was charged with 68.2 parts by weight of polyol A (polypropylene glycol, OH value 56, Functionality 3; Excenol 3030 available from Asahi Glass Co., Ltd.) and 17.0 parts by weight of polyol B (polypropylene glycol, OH value 56, Functionality 2; Excenol 2020 available from Asahi Glass Co., Ltd.) and was dehydrated at a reduced pressure with mixing for one hour. The reaction vessel was then changed to nitrogen atmosphere. Next, 14.8 parts by weight of toluene diisocyanate (2,4 configuration = 80 %; available from Mitsui Chemicals Inc. as Cosmonate T-80) was added to the reaction vessel and reacted for 5 hours at a temperature of 80 °C in the reaction vessel to synthesize a prepolymer A having a terminal isocyanate group (NCO % = 3.58 %).

Separately, 59.6 parts by weight of toluene was mixed with a mixture of 15.0 parts by weight of polyol A, 4.2 parts by weight of n-propyl alcohol (available from Nacalai Tesque, Inc.) and 0.25 parts by weight of lead octylate (available from Toei Chemical Industry Co., Ltd. as BTT-24), into which 357.6 parts by weight of neodymium based filler (NdFeB magnetic powder; available from Molycorp Magnequench Co., Ltd. as MQP-14-12; average particle size 15 $\mu$m) was added, to form a filler dispersion. To the filler dispersion, 100 parts by weight of the prepolymer A was mixed and mixed using a planetary centrifugal mixer (available from Thinky Corporation) and defoamed. The reaction solution was adjusted by a nip roller to a 1.5 mm thickness. It was then kept at 60 °C for 18 hours to cure to obtain a magnet filler dispersion resin. It was then magnetized at 2.0 T using a magnetizing apparatus (available from Tamakawa Co., Ltd.) to obtain a magnetic resin.

Preparation of magnetic resin-containing polymer foam

Next, 60.0 parts by weight of a polypropylene glycol (available from Mitsui Chemicals Inc. as EP-3028; OH value 28), 40.0 parts by weight of a polymer polyol (available from Mitsui Chemicals Inc. as POP-3128; OH value 28), 2.0 parts by weight of diethanolamine (available from Mitsui Chemicals Inc.), 3.0 parts by weight of water, 1.0 part by weight of a foam stabilizer (available from Dow Corning Toray Co., Ltd. as SF-2962) and 0.5 parts by weight of an amine catalyst (available from Air Products Japan Co., Ltd. as Dabco 33LV) were mixed with stirring to obtain a mixture A which was controlled to a temperature of 23 °C. Separately, a mixture of toluene diisocyanate and crude MDI (80/20 weight ratio; available from Mitsui Chemicals Inc. as TM-20; NCO% = 44.8%) was controlled to a temperature of 23 °C to obtain a mixture B.

The magnetic resin obtained above was cut to 50 mmφ and was preliminary heated at 100 °C for one hour. The magnetic resin after preheating was placed on a desired position in a cavity of a square of 400 mm and a thickness of 70 mm in a mold and heated to a mold temperature of 62 °C. Into the mold, a raw material obtained by mixing the mixture A with the mixture B so as to become NCO index = 1.0 was poured using a high pressure foaming machine and foamed and cured at a mold temperature 62 °C for 5 minutes to obtain a magnetic resin-containing polymer foam. The polymer foam was subjected to a determination of an average cell diameter near the interface between the magnetic resin and the polymer foam, an average cell diameter at a center portion thereof, a difference of the average cell diameters, a change of average magnetic flux density (Gauss) and property stability (%) as explained hereinafter. The results are shown in Table 1.

Average cell diameter

A cross section at the vicinity (1 mm apart from an interface) of the magnetic resin in the polymer foam and a cross section at a center portion (5 cm apart from the interface) of the polymer foam, the interface being present between the magnetic resin and the polymer foam, were observed by a scanning electron microscope (SEM; available from Hitachi Science Systems Ltd. as S-3500N) with a magnification of 50 times to obtain an image, of which cell diameters in a desired area were then determined by an image analysis software (WinROOF available from Mitani Corporation) to obtain an average cell diameter of the polymer foam. A difference of the average cell diameters was also calculated by the following equation:

Difference of average cell diameters = (average cell diameter at center portion) - (average cell diameter at the vicinity of interface)

The results are shown in Table 1.

Average magnetic flux density change

A pressure indenter having 30 mmφ was applied to a center portion of the magnetic resin-containing polymer foam at a pressure of 50 kPa and a durability test of 500,000 times was conducted. A hall element (available from Asahi Kasei Microdevices Corporation as EQ-430L) was adhered to an acryl board and was then attached to a surface of the polymer foam opposite to the side of the magnetic resin in the durability-tested magnetic resin-containing polymer foam. A pressure indenter having 30 mmφ was applied to a center portion of the magnetic resin at a pressure of 10 kPa to obtain a change (Gauss) of magnetic flux density by an output voltage change of the hall element. The measurement of the change of the magnetic flux density was conducted 10 times and its average was calculated therefrom. It was conducted at a temperature of 20 °C.

Property stability

A distribution of the change of magnetic flux density was determined by the following equation.

$$\text{Property stability}(\%) = \frac{\sqrt{(\text{Measured magnetic flux density change} - \text{Average magnetic flux density change})^2}}{\text{Average magnetic flux density change}} \times 100$$

Examples 2 to 5 and Comparative Example 1 to 2

A magnetic resin-containing polymer foam was prepared as generally described in Example 1, using the conditions of Table 1, and their average cell diameter of the polymer foam, change of magnetic flux density and property stability were determined as generally described in Example 1, the results being shown in Table 1. Table 1 also shows NCO indexes and mono-ol contents of the magnetic resin.

Table 1

| | | Examples | | | | | Comparative Examples |
|---|---|---|---|---|---|---|---|
| | | 1 | 2 | 3 | 4 | 5 | 1 |
| Prepolymer | A | 100,0 | 100,0 | 100,0 | 100,0 | 100,0 | 100,0 |
| Polyol | A | 15,0 | 5,8 | 37,9 | 189,4 | 189,4 | 189,4 |
| n-Propyl alcohol (mono-ol) | | 4,2 | 4,8 | 2,8 | | | |
| Solvent | Toluene | 59,6 | 55,3 | 70,4 | 144,7 | 144,7 | 144,7 |
| Neodymium based magnetic filler (MQP-14-12) | | 357,6 | 331,8 | 422,1 | 868,2 | 868,2 | 868,2 |
| Catalyst (n-butyltin dilaurate) | | 0,25 | 0,23 | 0,29 | 0,60 | 0,60 | 0,60 |
| NCO index of magnetic resin | | 1,00 | 1,00 | 1,00 | 0,45 | 0,45 | 0,45 |
| Mono-ol content (meq/g) | | 0,59 | 0,72 | 0,33 | - | - | - |
| Preheat temperature | °C | 100 | 100 | 100 | 80 | 120 | - |
| Preheat time | hr | 1,0 | 1,0 | 1,0 | 3,0 | 0,5 | - |
| Average cell diameter of polymer foam | Interface | 224 | 167 | 304 | 251 | 267 | 421 |
| | Center portion | 364 | 371 | 353 | 346 | 378 | 355 |
| ($\mu$m) | Difference of average cell | 140 | 204 | 49 | 95 | 111 | -66 |
| Magnetic flux density change (Gauss) | | 5,8 | 6,0 | 5,5 | 4,3 | 4,7 | 5,0 |
| Property stability (%) | | 6,1 | 5,3 | 7,8 | 7,1 | 7,4 | 11,9 |

As is apparent from Table 1, the examples of the present invention are excellent in magnetic flux density change (Gauss) after durability test and property stability. Example 2 has an increased mono-ol content and the average cell diameter in the vicinity of the magnetic resin in the polymer foam became decreased. Accordingly, the property stability slightly enhances. Example 3 shows a decreased mono-ol content and the average cell diameter in the vicinity of the magnetic resin in the polymer foam being increased. Accordingly, the property stability decreases. Example 4 did not use a mono-ol and the magnetic resin which was preliminary heated to 80 °C for 3 hours was employed. The average cell diameter in the vicinity of the magnetic resin of the polymer foam was slightly larger. Accordingly, the property stability slightly decreased and the magnetic flux change slightly decreased because of self-adhesion. Example 5 did not use a mono-ol and the magnetic resin was preliminary heated at 120 °C for 0.5 hours. It shows a larger average cell diameter in the vicinity of the interface between the magnetic resin and the polymer foam. Accordingly, the property stability slightly decreased and the magnetic flux change slightly decreased because of self-adhesion. Comparative Example 1 did not preliminary heat the magnetic resin and the average cell diameter in the vicinity of the interface between the magnetic resin and the polymer foam was larger, thus resulting in poor property stability.

INDUSTRIAL APPLICABILITY

The deformation detection sensor of the present invention can be applied to a seat for vehicles and is excellent in durability so that it endures a long period of use. In addition, the deformation detection sensor of the present invention is hard to peel the magnetic resin off and is excellent in stability.

REFERENCE SIGNS LIST

1    Sitting portion
2    Backrest portion
3    Magnetic sensor
4    Magnetic resin
5    Polymer foam

6    Magnetic resin-containing polymer foam
7    Outer skin
8    Pedestal

**Claims**

1.  A deformation detection sensor which comprises:

    a magnetic resin-containing polymer foam which comprises a magnetic resin, in which a magnetic filler is contained, and a polymer foam in which the magnetic resin is included, and
    a magnetic sensor that detects a magnetic change caused by a deformation of the magnetic resin-containing polymer foam,
    wherein an average cell diameter of cells of the polymer foam in the vicinity of an interface between the magnetic resin and the polymer foam is smaller than that of cells of a center portion of the polymer foam.

2.  The deformation detection sensor according to claim 1,
    wherein a difference between the average cell diameter of cells of the polymer foam in the vicinity of an interface of the magnetic resin of the polymer foam and that of cells of the center portion of the polymer foam is not less than 30 $\mu$m.

3.  The deformation detection sensor according to claim 1 or 2,
    wherein the magnetic resin and the polymer foam are made of polyurethane.

4.  The deformation detection sensor according to anyone of claims 1 to 3, wherein the polyurethane which forms the magnetic resin comprises a mono-ol component.

5.  The deformation detection sensor according to claim 4,
    wherein the mono-ol component is a mono-ol having an end alkyl group.

6.  The deformation detection sensor according to claim 4 or 5,
    wherein the mono-ol component is contained in an amount of 0.1 to 1.0 meq/g in the total of the polyurethane raw material.

7.  The deformation detection sensor according to anyone of claims 1 to 6, wherein the magnetic resin and the polymer foam are adhered by self-adhesion.

8.  The deformation detection sensor according to anyone of claims 1 to 7, wherein the magnetic resin-containing polymer foam is a cushion pad for a vehicle and the deformation to be detected occurs by a sitting of a person.

9.  A method for producing a deformation detection sensor, comprising the steps of:

    a step of dispersing a magnetic filler in a polyurethane resin precursor,
    a step of curing the resin precursor to form a magnetic resin,
    a step of preliminary heating (pre-heating) the magnetic resin,
    a step of placing the magnetic resin in a mold for a polymer foam,
    a step of pouring a polyurethane raw material of the polymer foam into the mold to foam, whereby the magnetic resin is integrated with the polymer foam, and
    a step of combining the magnetic resin-containing polymer foam with a magnetic sensor that detects a magnetic change caused by a deformation of the magnetic resin-containing polymer foam.

10. The method of producing the deformation detection sensor according to claim 9, wherein the magnetic resin and the polymer foam are made of polyurethane and the resin precursor contains a mono-ol component.

11. The method of producing the deformation detection sensor according to claim 9 or 10, wherein the mono-ol component is a mono-ol having an end alkyl group.

12. The method of producing the deformation detection sensor according to claim 10 or 11, wherein the mono-ol component is contained in an amount of 0.1 to 1.0 meq/ g in the total of the polyurethane raw material.

13. The method of producing the deformation detection sensor according to claim 9, wherein the pre-heating is conducted at a temperature of 70 to 130 °C for 0.25 to 4 hours.

14. The method of producing the deformation detection sensor according to anyone of claims 9 to 13, wherein the magnetic resin and the polymer foam are adhered by self-adhesion.

[Fig. 1]

[Fig. 2]

Europäisches
Patentamt

European
Patent Office

Office européen
des brevets

# EUROPEAN SEARCH REPORT

Application Number

EP 16 16 4141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/036456 A1 (KISHIDA TAKEO [JP] ET AL) 14 February 2008 (2008-02-14) * paragraphs [0107], [0210] - [0215]; figure 27 * ----- | 1-14 | INV. B60N2/00 B60N2/70 G01G19/414 G01L1/12 B29C44/12 |
| X | EP 1 521 071 A2 (FIAT RICERCHE [IT]) 6 April 2005 (2005-04-06) * paragraphs [0025] - [0030] * ----- | 1-14 | |
| Y | WO 2011/029575 A1 (FREUDENBERG CARL KG [DE]; GUND CHRISTOPH [DE]; SCHMIED BENNO [DE]; HEI) 17 March 2011 (2011-03-17) * page 8, line 23 - page 14, line 19; figures 1-4,6 * ----- | 1-14 | |
| Y | JP 2011 183686 A (HONDA MOTOR CO LTD) 22 September 2011 (2011-09-22) * abstract; figures 1-4 * ----- | 1-14 | |

TECHNICAL FIELDS
SEARCHED      (IPC)

B60N
B29C
G01G
G01L

The present search report has been drawn up for all claims

| Place of search | Date of completion of the search | Examiner |
|---|---|---|
| Munich | 14 September 2016 | Lotz, Klaus-Dieter |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 16 16 4141

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2016

| Patent document cited in search report | | Publication date | Patent family member(s) | | Publication date |
|---|---|---|---|---|---|
| US 2008036456 | A1 | 14-02-2008 | JP | 4165589 B2 | 15-10-2008 |
| | | | JP | 2008039659 A | 21-02-2008 |
| | | | US | 2008036456 A1 | 14-02-2008 |
| | | | US | 2010090691 A1 | 15-04-2010 |
| EP 1521071 | A2 | 06-04-2005 | AT | 495428 T | 15-01-2011 |
| | | | EP | 1521071 A2 | 06-04-2005 |
| WO 2011029575 | A1 | 17-03-2011 | DE | 102009040486 B3 | 28-04-2011 |
| | | | WO | 2011029575 A1 | 17-03-2011 |
| JP 2011183686 | A | 22-09-2011 | NONE | | |

EPO FORM P0459

For more details about this annex : see Official Journal of the European Patent Office, No. 12/82

**EP 3 085 571 A1**

**Patent documents cited in the description**

- JP 2012108113 A
- JP 2011255743 A
- JP 2007212196 A
- JP 2006014756 A
- EP 3028 A
- EP 3033 A